Europäisches Patentamt

European Patent Office

Office européen des brevets

(11) Veröffentlichungsnummer: **0 240 611**
**A2**

## (12) EUROPÄISCHE PATENTANMELDUNG

(21) Anmeldenummer: **86118149.3**

(51) Int. Cl.4: **B62J 7/02**

(22) Anmeldetag: **30.12.86**

(30) Priorität: **11.04.86 DE 3612310**

(43) Veröffentlichungstag der Anmeldung:
**14.10.87 Patentblatt 87/42**

(84) Benannte Vertragsstaaten:
**AT BE CH DE ES FR GB IT LI LU NL SE**

(71) Anmelder: **KRAUSER Kraftfahrzeug-Zubehör Vertriebs-GmbH**
**Hörmannsbergerstrasse 18**
**D-8905 Mering(DE)**

(72) Erfinder: **Krauser, Michael**
**Hörmannsbergerstrasse 18**
**D-8905 Mering(DE)**

(74) Vertreter: **von Kirschbaum, Albrecht,**
**Dipl.-Ing.**
**Hermann-Ehlers-Strasse 21a**
**D-8034 Germering(DE)**

(54) **Das Hinterrad eines Motorrads umgreifende Halterungseinrichtung.**

(57) Es ist eine das Hinterrad eines Motorrads umgreifene Halterungseinrichtung mit seitlichen Halterungsteilen geschaffen, an denen nach oben schräg nach hinten abstehende Seitenteile angebracht sind, welche an ihrer Oberseite eine Gepäckbrücke tragen. In der geschlossenen Oberseite der in Längsschnitt dem Profil eines Heckspoilers angenäherten Gepäckbrücke sind Führungsnute ausgebildet, in welche, wenn ein Motorradkoffer auf die Brücke aufgesetzt ist, an dessen Unterseite ausgebildete, rippenartige Ansätze passen. Ferner ist am vorderen Ende der Gepäckbrücke zwischen den beiden Führungsnuten eine schwenkbare Halterungszunge vorgesehen, welche, in die vertikale Stellung verschwenkt, von unten in einen an der Kofferunterseite ausgebildeten Schacht mit integriertem Schloß einführbar ist und in diesem so einrastet, daß der Koffer, welcher mit seinem dem Schacht gegenüberliegenden Randbereich den hinteren Teil der Gepäckbrücke umgreift, seitlich einwandfrei geführt, sicher auf der Gepäckbrücke gehaltert ist.

Damit die Gepäckbrücke bei praktisch allen derzeit gängigen Motorradtypen angebracht werden kann, sind auf ihrer Unterseite nach unten offene, T-förmige Querschlitze ausgebildet, in welchen Sicherungsmuttern stufenlos verschiebbar aufgenommen sind, welche mittels Schraubbolzen entsprechend der Breite der Heckpartie des jeweiligen Motorradtyps in der entsprechenden Lage fixierbar sind.

## Das Hinterrad eines Motorrads umgreifende Halterungseinrichtung

Die Erfindung betrifft eine das Hinterrad eines Motorrads umgreifende Halterungseinrichtung für Gepäckstücke, insbesondere Motorradkoffer, nach dem Oberbegriff des Anspruchs 1.

In dem DE-GM 77 07 615 ist eine solche Halterungseinrichtung zum Befestigen von Gepäckstücken, wie Motorradoffer, und zum Anbringen von verschiedenen Signaleinrichtungen, wie Blinkern u.ä. beschrieben. Diese Halterungseinrichtung weist jeweils eine rechte und linke seitliche Halterung für Motorradkoffer in Form eines etwa rechteckigen Rahmenteils, zwei an deren oberen Längsholm befestigte, nach oben vorstehende Rahmenteile, eine quer dazu angebrachte Gepäckbrücke sowie eine an den Halterungen angebrachte und diese miteinander verbindende, längenverstellbare Querverstrebung auf. Zur Anpassung an die Breite der Heckpartie verschiedener Motorradtypen können die Rahmenteile sowohl auf der Außenseite als auch auf der Innenseite der seitlichen Motorradkoffer-Halterungen befestigt werden.

Dementsprechend sind dann auch die Rahmenteile auf der Innen-oder Außenseite von nach unten abragenden Längsstäben der Gepäckbrücke angebracht. Dadurch kann die Breite dieser Halterungseinrichtung zweimal um die Dicke der nach unten abragenden Längsstäbe der Gepäckbrücke plus der Dikke der Rahmenteile, d.h. etwa in der Größenordnung von 4 bis 5cm variiert werden.

Um eine solche Halterungseinrichtung auch an Motorräder mit noch breiteren Heckpartien anpassen zu können, sind gemäß der DE PS 32 49 434 in den beiden Längsstäben der Gepäckbrücke - schlitzförmige Ausnehmungen ausgebildet; in diese können entweder Schraubmuttern oder die einen Enden von Verlängerungsplättchen eingeschoben und festgelegt werden, deren andere in der Verbreiterungsrichtung der Gepäckbrücke vorstehenden Enden mit den Längsstreben der Rahmenteile verbunden sind. Mit Hilfe solcher Verlängerungsplättchen kann dann die Breite der bekannten Halterungseinrichtung nochmlas um etwa 8cm vergrößert werden.

Die in der DE-PS 32 49 434 schematisch dargestellte Gepäckbrücke weist eine Vielzahl von Durchbrüchen auf, welche (in Fahrtrichtung gesehen) im vorderen Teil der Brücke konisch zulaufen. In diese Durchbrüche stehen, wenn ein Motorradkoffer, vorzugsweise ein sogenanntes Top-Case, auf der Gepäckbrücke befestigt werden soll, von der Unterseite eines solchen Motorradkoffers abragende, nach vorne offene L-förmige Haken vor, die beim Aufsetzen des Motorradkoffers in zwei der sich nach vorne verjüngenden Durchbrüche eingreifen. Ein Motorradkoffer wird nunmehr soweit nach vorne geschoben, bis ein am Kofferboden angebrachtes Schloß eine auf der Unterseite der Gepäckbrücke angebrachte, nach hinten vorstehende Haltezunge aufnimmt. Sobald die L-förmigen Sicherungshaken fest in den konisch zulaufenden Durchbrüchen der Gepäckbrücke sitzen, rastet das Schloß in einen der Ausschnitte der Halterungszunge ein. Als Diebstahlschutz wird das Schloß noch abgeschlossen.

Bei dieser Art der Befestigung und Anbringung eines Motorradkoffers in Form eines Top-Case auf einer Gepäckbrücke dient das Schloß sowohl der Sicherung als auch der Halterung des Koffers auf der Brücke. Da während einer Fahrt ein Motorrad starken Erschütterungen und Schwingungen aus gesetzt ist, welche über die seitlich angebrachten Halterungen und die quer dazu angebrachte Gepäckbrücke auch auf das der Halterung und Sicherung dienende Schloß an dem sogenannten Top-Case übertragen werden, sind sowohl dieses Schloß als auch die an der Gepäckbrückenunterseite angebrachte Halterungszunge hohen Beanspruchungen ausgesetzt und einem großen Verschleiß unterworfen.

Durch Eindringen von Straßenstaub, Schmutz und Wasser zeigt sich an diesen Teilen ein besonders schneller Verschleiß und eine hohe Abnutzung. Mitunter ist daher der Motorradkoffer nicht mehr fest und zuverlässig genug mit der Gepäckträgerbrücke verbunden, so daß aus Sicherheitsgründen das Schloß und/oder die an der Gepäckbrückenunterseite angebrachte Halterungszunge ausgewechselt werden müssen.

Aufgabe der Erfindung ist es daher, eine Halterungseinrichtung für Gepäckstücke, insbesondere Motorradkoffer, mit einer stabilen und verwindungssteifen Gepäckbrücke zu schaffen, welche eine gute und sichere Seitenführung sowie Halterung für auf ihr anbringbare Motorradkoffer in Form der sogenannten Top-Cases gewährleistet, und welche darüber hinaus bezüglich ihrer Breite ohne Verwendung zusätzlicher Teile an die Heckpartien praktisch aller derzeit angebotenen Motorradtypen anpaßbar ist.

Gemäß der Erfindung ist diese Aufgabe bei einer Halterungseinrichtung für Gepäckstücke, insbesondere Motorradkoffer, nach dem Oberbegriff des Anspruchs 1 durch die Merkmale im kennzeichnenden Teil des Anspruchs 1 gelöst. Eine vorteilhafte Weiterbildung der Erfindung ist Gegenstand von Anspruch 2.

Gemäß einer bevorzugten Ausführungsform der Erfindung sind in einer geschlossenen Oberseite der im Längsschnitt dem Profil eines Heckspoilers angenäherten Gepäckbrücke in deren Längsrichtung Führungsnute ausgebildet. Diesen Führungs nuten sind rippenartige Ansätze angepaßt, welche an der Unterseite eines die Gepäckbrücke voll umschließenden und deren hinteren Teil umgreifenden Motorradkoffers in Form eines sogenannten Top-Case ausgebildet sind. Ferner ist am (in Fahrtrichtung gesehen) vorderen Ende der Gepäckbrücke zwischen den beiden Führungsnuten ein etwa rechteckiger Ausschnitt zur Aufnahme eines in eine etwa vertikale Stellung hochklappbaren Halterungszunge vorgesehen. Sobald diese Halterungszunge in ihre vertikale Stellung hochgelappt ist, ist sie von unten in einen im vorderen unteren Mittenbereich des Motorradkoffers in Form des Top-Case ausgebildeten Schacht mit integriertem Schloß einführbar und rastet dann auch in dieses Schloß ein.

Da der Boden des als Top-Case bezeichneten Motorradkoffers einen der Außenform dieser Gepäckbrücke angepaßten, ringsum verlaufenden Rand aufweist, ist durch die an der Kofferunterseite vorgesehenen, rippenartigen Ansätze eine besonders gute Seitenführung des auf der Brücke angebrachten Motorradkoffers geschaffen. Da ferner der ringsum verlaufende Rand am Kofferboden in seinem (in Fahrtrichtung gesehen) hinteren Bereich so ausgebildet ist, daß er diesen Teil der Gepäckbrücke umgreift, ist, sobald die hochgeklappte Halterungszunge eingerastet ist, eine besonders gute und sichere Führung und Halterung geschaffen. Das an dieser Art Motorradkoffer, nämlich den sogenannten Top-Cases vorgesehene Schloß dient dann lediglich der Diebstahlsicherung und ist somit keiner nennenswerten Beanspruchung und damit auch keinem nennenswertem Verschleiß ausgesetzt.

Gemäß einer bevorzugten Weiterbildung der Erfindung sind Sicherungsmuttern, mittels welcher die Gepäckbrücke auf der Oberseite der jeweils nach oben und nach innen abgewinkelten Seitenteile gehaltert ist, in nach unten offenen, senkrecht zur Längsrichtung (bzw. in montiertem Zustand senkrecht zur Fahrzeuglängsachse) verlaufenden, T-förmigen Querschlitzen untergebracht, welche sich über einen Großteil der Breite der Gepäckbrücke erstrecken, und in welchen die Sicherungsmuttern stufenlos verschiebbar und an jeder beliebigen Stelle fixierbar sind.

Aufgrund dieser Ausbildung kann eine Halterungseinrichtung mit der erfindungsgemäß ausgebildeten Gepäckbrücke ohne Schwierigkeit an die Breite praktisch jeden Motorradtyps angepaßt werden, und zwar in einem Bereich von etwa 25cm bis 42/44cm, ohne daß für eine solche Anpassung sowie für die Breitenverstellbarkeit der Brücke zusätzliche Teile erforderlich sind.

Da die Gepäckbrücke sowie die Seitenteile aus hochwertigem, verwindungssteifem, und hochbelastbarem Chemiewerkstoff, nämlich vorzugsweise aus glasfaserverstärktem Polyamid, hergestellt, sind, weisen zur Materialersparnis vorzugsweise die Unterseite der Gepäckbrücke sowie die Innenseiten der Seitenteile regelmäßig ausgebildete Versteifungsstege auf, welche vorzugsweise in Form von Bienenwaben ausgebildet und entsprechend angeordnet sind. Durch die vorzugsweise Ausbildung eines Bienenwabenmusters auf der Unterseite der Gepäckbrücke ist trotz der erwähnten Materialersparnis und des dadurch bedingten geringeren Gewichts dennoch eine äußerst stabile, verwindungssteife und bruchsichere Ausführung der Gepäckbrücke sowie auch der Seitenteile geschaffen.

Nachfolgend wird die Erfindung anhand einer bevorzugten Ausführungsform unter Bezugnahme auf die anliegende Zeichnung im einzelnen erläutert. Es zeigen:

Fig.1 eine schematische perspektivische Gesamtansicht einer bevorzugten Ausführungsform einer das Hinterrad eines Motorrads umgreifenden Halterungseinrichtung mit Seitenteilen und einer diese Seitenteile verbindenden Gepäckbrücke gemäß der Erfindung, und

Fig.2 eine schematische, in Einzelteile aufgelöste Darstellung einer Gepäckbrücke und eines dieser Gepäckbrücke zugeordneten Seitenteils.

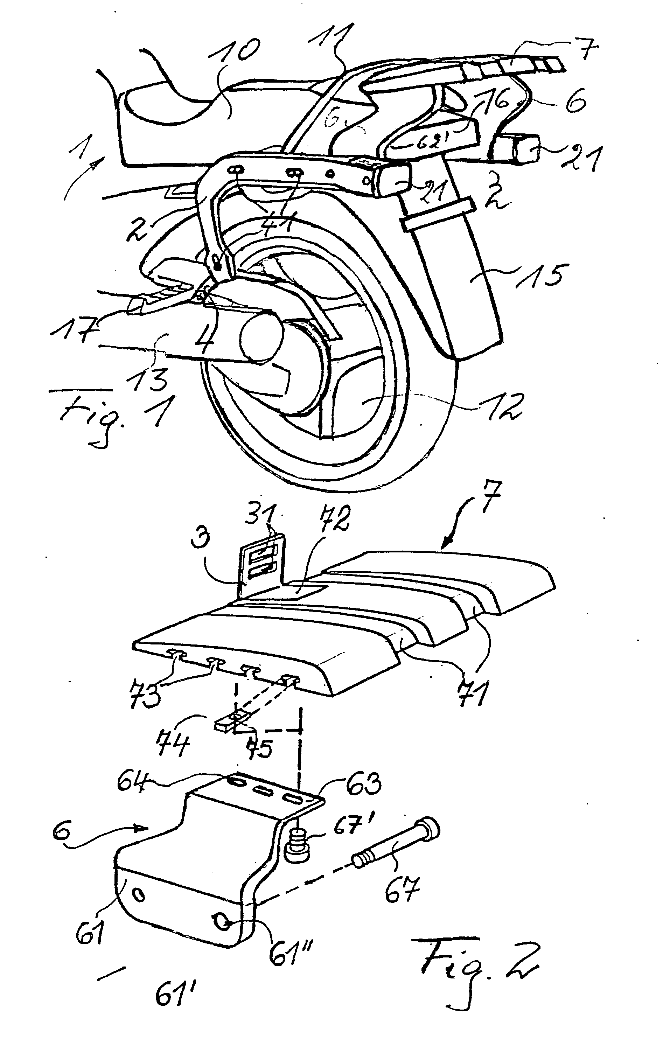

In Fig.1 ist schematisch der hintere Teil eines Motorrads 1 dargestellt, an welchem eine Sitzbank 10, ein Haltebügel 11, ein Hinterrad 12, ein Auspuff 13, ein Schutzblech 15, eine Fußraste 17 für den Sozius sowie ein Rück-und Bremslicht 16 sowie weitere nicht näher bezeichnete und hier auch nicht aufgeführte Teile zu erkennen sind.

Etwa in Höhe des unteren Randes der Sitzbank 10 sind mittels in Fig.1 nicht erkennbarer Beschlagteile Halterungsteile in Form von bumerangförmigen Tragelementen 2 am nicht näher bezeichneten Rahmen des Motorrads 1 befestigt. Das untere freie Ende jedes Tragelements 1 ist über ein schematisch dargestelltes Befestigungsteil 4 an bzw. im Bereich der Fußraste 65 mittels Schrauben 41 befestigt. Am hinteren freien Ende der Tragelemente 2 ist ein Blinker 21 integriert.

An dem in Fig.1 etwa waagrecht verlaufenden Schenkel dieser Tragelemente 1 sind im Bereich des Blinkers 21, d.h. im (in Fahrtrichtung gesehen) hinteren Ende vorzugsweise abgewinkelte Seitenteile 6 angebracht, deren obere Kanten durch eine Brücke 7 verbunden sind. Wie genauer aus Fig.2 zu ersehen ist, weist die Gepäckbrücke 7 eine geschlossene Oberseite ohne irgendwelche Durchbrüche auf und ist im Längsschnitt dem Profil eines Heckspoilers angenähert. Auf der Oberseite der Brücke 7 sind in deren Längsrichtung, welche im montierten Zustand der Brücke parallel zur Fahrzeuglängsachse verläuft, vorzugsweise zwei Führungsnute 71 ausgebildet.

Am (in Fahrtrichtung gesehen) vorderen Ende der Gepäckbrücke 7 ist zwischen den beiden Führungsnuten 71 ein Ausschnitt 72 vorgesehen, welcher so tief ist, daß eine an seinem (in Fahrtrichtung gesehen) vorderen Ende schwenkbar gelagerte Halterungszunge 3 in umgeklappter Lage etwa bündig mit der Gepäckbrücken-Oberseite ist. In Fig.2 ist die Halterungszunge 3 in ihrer hochgeklappten, etwa vertikalen Stellung wiedergegeben. Die Halterungszunge 3 weist zwei gleich große durch einen Mittensteg voneinander getrennte Ausschnitte 31 auf. Ferner sind in der Unterseite der Gepäckbrücke 7 senkrecht zur Längsrichtung verlaufende T-förmige Querschlitze 73 ausgebildet, welche sich über einen Großteil der Breite der Gepäckbrücke 7, vorzugsweise bis etwa unter die Führungsnute 71 erstrecken.

Das linke schematisch dargestellte Seitenteil weist einen unteren, im montierten Zustand etwa vertikalen Befestigungsabschnitt 61 auf. Dieser Befestigungsabschnitt 61 geht in einen nach oben und schräg nach hinten verlaufenden Mittenteil 62 über, welcher seinerseits an dem dem Befestigungsabschnitt 61 abgewandten Ende in einen im montierten Zustand etwa waagrecht verlaufenden bzw. nach hinten leicht ansteigenden Abschnitt 63 übergeht. An dem äußeren freien Ende des Abschnitts 63 sind parallel zu dessen Außenkante mehrere, vorzugsweise drei Längsschlitze 64 ausgebildet. Ebenso sind in dem unteren, etwa vertikal verlaufenden Befestigungsabschnitt 61 vorzugsweise zwei Bohrungen 61' vorgesehen. Im hinteren Bereich des mittleren Abschnitts 62 des Seitenteils ist vorzugsweise ein keilförmiger Einschnitt 62' ausgebildet, welcher - schematisch in der perspektivischen Darstellung der Fig.1 angedeutet ist.

Ferner sind in Fig.2 rechtwinklige oder vorzugsweise quadratische Sicherungsmuttern 74 dargestellt, welche eine mit Innengewinde versehene Mittenbohrung 75 aufweisen. Darüberhinaus sind - schematisch zwei Schraubbolzen 67 und 67' dargestellt. Mittels jeweils zwei Schraubbolzen 67 lassen sich die Seitenteile 6 am hinteren Ende des Waagrechten Schenkels des Tragelements 2 befestigen, wie aus Fig.1 zu ersehen ist.

Zur Befestigung der senkrecht zur Fahrtrichtung anzubringen den Gepäckbrücke 7 werden von jeder Seite in zwei vorzugsweise drei der T-förmigen Querschlitze 73 Sicherungsmuttern 74 aufgenommen, die sich in den jeweiligen Querschlitzen 73 stufenlos verschieben lassen. Sie werden in eine solche Lage gebracht, daß ihre mit Innengewinde versehene Mittenbohrung 75 jeweils über zwei vorzugsweise drei der Langlöcher 64 im oberen Abschnitt 63 des Seitenteils 3 zu liegen kommen.

Sobald diese genaue Zuordnung zwischen in den Querschlitzen 73 eingebrachten Sicherungsmuttern 74 und den entsprechenden Langlöchern 64 erreicht ist, werden von unten durch diese Langlöcher hindurch Schraubbolzen 67' in die jeweiligen Sicherungsmuttern 74 geschraubt und dann - nach einer endgültigen Ausrichtung und symmetrischen Anordnung der Brücke bezüglich der Fahrzeuglängsachse - fest angezogen.

Da sich die auf der Unterseite der Gepäckbrücke 7 ausgebildeten T-förmigen Querschlitze über einen Großteil der Breite der Gepäckbrücke, vorzugsweise bis etwa in den Bereich der Führungsnute 71 erstrecken, kann die Gepäckbrücke 7 in der vorstehend beschriebenen Weise ohne Verwendung zusätzlicher Teile an die Heckpartien praktisch aller derzeit angebotenen Motorradtypen angepaßt werden.

Die Unterseite eines nicht näher dargestellten Motorradkoffers, eines sogenannten Top-Case, welcher auf der Brücke 7 angebracht und gehaltert werden soll, weist vorzugsweise den Führungsnuten 71 in den Abmessungen entsprechende, rippenartige Ansätze ausgebildet. Ferner weist die Unterseite eines solchen Top-Case einen von dieser vorstehenden Randbereich auf, dessen Innenabmessungen den Außenabmessungen der Gepäckbrücke 7 sowohl hinsichtlich der Breite (quer zur Fahrtrichtung) als auch hinsichtlich der Tiefe (in Fahrtrichtung) entsprechen. Der dem hinteren Bereich der Gepäckbrücke 7 entsprechende Teil des Randbereichs ist so ausgebildet, daß er diesen Bereich nicht nur voll umschließt, sondern auch noch umgreift. Ferner ist im vorderen unteren Mittenbereich des Motorradkoffers auf dessen Unterseite ein Schacht ausgebildet, in dessen Bereich ein von außen betätigbares Schloß integriert ist.

Wenn ein Motorradkoffer in Form eines Top-Case, dessen Unterseite in der vorstehend beschriebenen Weise gestaltet ist, auf der erfindungsgemäßen Gepäckbrücke 7 angebracht und gehaltert werden soll, wird zuerst die in ihr schwenkbar gelagerte Halterungszunge 3 etwa in eine vertikale, in Fig.2 wiedergegebene Lage gebracht.

Nunmehr wird das Top-Case von hinten oben so aufgesetzt, daß die Halterungszunge 3 in den an der Top-Case-Unterseite ausgebildeten Schacht eingeführt wird. Unmittelbar bevor ein Schloßriegel in den oberen Ausschnitt 31 der Halterungszunge 3 einrasten kann, wird die Gepäckbrücke von dem ihren hinteren Rand umgreifenden Rand am Kofferboden umfaßt, so daß beim Einrasten, vorzugsweise des unteren Ausschnitts 31 der Halterungszunge 3 das Top-Case fest auf der Gepäckbrücke 7 angebracht ist. Hierfür ist eine sehr gute Seitenführung durch die in dem Führungsnuten 71 der Brücke 7 liegenden, entsprechend ausgebildeten, rippenartigen Ansätze sowie durch den die Gepäckbrücke 7 ringsum umschließenden Rand gewährleistet. Die eigentliche Halterung ist durch den in Fahrtrichtung gesehenen vorderen Randbereich auf der Unterseite des Motorradkoffers sowie durch die in dessen Schacht eingeführte und dort verriegelte Halterungszunge 3 erreicht ist.

Innenseite regelmäßig ausgebildete, vorzugsweise in Form eines Bienenwabenmusters angeordnete Versteifungsstege aufweisen.

### Ansprüche

1. Das Hinterrad eines Motorrads umgreifende Halterungseinrichtung für Gepäckstücke, insbesondere Motorradkoffer, mit zwei seitlichen Halterungsteilen, von denen jedes ein nach oben und schräg nach hinten ragendes Seitenteil trägt, und mit einer Gepäckbrücke, die mittels Sicherungsmuttern mit den Seitenteilen verschraubt ist, dadurch **gekennzeichnet,** daß in einer geschlossenen Oberseite der im Längsschnitt dem Profil eines Heckspoilers angenäherten Gepäckbrücke (7) in deren Längsrichtung (parallel zur Fahrzeuglängsachse) Führungsnute (71) ausgebildet sind, welchen an der Unterseite eines die Gepäckbrücke (7) voll umschließenden und deren (in Fahrtrichtung gesehen) hinteres Ende umgreifenden Motorradkoffers (Top-Case) ausgebildete, rippenartige Ansätze angepaßt sind, und daß (in Fahrtrichtung gesehen) am vorderen Ende der Gepäckbrücke (7) zwischen den beiden Führungsnuten (71) ein etwa rechteckiger Ausschnitt (72) zur Aufnahme einer in eine etwa vertikale Stellung hochklappbaren Halterungszunge (3) vorgesehen ist, welche in der vertikalen Stellung von unten in einen im vorderen unteren Mittenbereich des Motorradkoffers (Top-Case) ausgebildeten Schacht mit integriertem Schloß einführbar ist und in diesem einrastet.

2. Halterungseinrichtung nach Anspruch 1, dadurch **gekennzeichnet,** daß die Sicherungsmuttern (74), mittels welcher die Gepäckbrücke (7) auf der Oberkante der jeweils nach oben innen abgewinkelten Seitenteile (6) gehaltert ist, in sich senkrecht zur Längsrichtung über einen Großteil der Breite der Gepäckbrücke (7) erstreckenden T-förmigen Querschlitzen (73) stufenlos verschiebbar aufgenommen und fixierbar sind.

3. Halterungseinrichtung nach einem der vorhergehenden Ansprüche, dadurch **gekennzeichnet,** daß die Gepäckbrücke (7) auf ihrer gesamten Unterseite zwischen den T-förmigen Querschlitzen (73) sowie die Seitenteile (6) auf ihrer gesamten

*Fig. 1*

*Fig. 2*